# EUROPEAN PATENT APPLICATION

(11) **EP 2 039 406 A2**
(43) Date of publication of application: **25.03.2009**
(21) Application number: 08161470.3
(22) Date of filing: 30.07.2008
(51) Int. Cl.: A63F 13/12

(54) **Video game for interactive engagement between multiple on-line participants in competition over internet websites**

(30) Priority: 30.07.2007 US 830345
(71) Applicant: JG Games Holdings, LLC, Austin, TX 78701 (US)
(72) Inventor: Ratcliff, Trey, Austin, TX 78701 (US)
(74) Representative: Hill, Justin John

(57) **Abstract**

A game playing apparatus for interactive engagement between multiple participants competing for control of internet websites or the like is provided. The game playing apparatus has a plurality of modules, including a character module, a website selection module a player interface module and a gaming module.

## Description

### CROSS-REFERENCE TO RELATED APPLICATIONS

Not applicable.

### TECHNICAL FIELD

The invention relates to a video game, and more particularly to a web-based video game for interactive engagement between multiple on-line participants in competition over internet websites.

### BACKGROUND OF THE INVENTION

There are a wide variety of games that take all forms, including board games, video games, computer games and field games. Many games, in each of these environments, deal with conquering and controlling territory. Classic board games like Risk® encourage players to take over, occupy, and expand countries. Likewise, computer games exist in which the players conquer territories for ever-increasing rewards. Field-based games, such as rugby and football, are conceptually very similar as one team attempts to invade the territory of another team.

Role-playing games are a form of interactive and collaborative entertainment. According to many role-playing games, players each control the actions of one or more characters. Players develop unique characters that accumulate various objects and abilities through extended play. The rules for how quickly, how many and what type of abilities and objects a character may gain usually involve several ratings or statistics. These ratings determine the outcome of various chance or future events that lead to new objects and abilities.

There are also several examples of internet driven, multi-player computer online role-playing games. Such games are typically networked over the internet, and encourage participation from an unlimited number of participants. Participants in such games use common software which is, for example, installed via CD-Rom or downloaded from the internet to the participant's computer.

The present invention is provided to solve problems relating to past on-line interactive games, and to provide advantages and aspects not provided by prior interactive games of this type. A full discussion of the features and advantages of the present invention is deferred to the following detailed description, which proceeds with reference to the accompanying drawings.

### SUMMARY OF THE INVENTION

According to the present invention, a gaming method for interactive engagement between multiple participants in competition over internet websites is provided. The method provides for selection of an internet website that has a website value associated with it, or assigned to it. The website value is based on the number of times the selected website has been accessed by web users (i.e., the number of "hits" a website receives). A first character is selected by a participant. The selected first character has player points associated therewith, and interactively engages at least one other character in a game environment. A winning character is determined as between the first and second character based on one or more determinative outcomes during the game. These determinative outcomes are generated by generating a first and second random value attributable to the first and second characters respectively. The random values are compared and the player points associated with the first and second characters are incremented based on the comparison. The steps of generating first and second random values, comparing the generated first and second random values and incrementing player points are repeated until a termination condition is met.

According to another aspect of the present invention, the termination condition occurs when the player points associated with either the first or second character is greater than or equal to a predetermined threshold income scenario, or in another scenario, less than or equal to a predetermined threshold. Alternatively, the termination condition can occur when either the first or second characters terminate engagement with the other character.

According to one aspect of the present invention, a computer program for generating and playing an interactive game for interactive engagement between multiple participants is provided. The computer program is embodied on a computer readable storage medium adapted to control a computer. The computer program comprises a plurality of code segments for performing certain tasks. A code segment is provided for generating a graphical interface configured to overlay the content of a website. The graphical interface overlay defines a simulated game environment in which the game is ultimately played. An input of a selected internet website is received, and the selected internet website is assigned a website value. The website value assigned to a particular website is based at least in part on the number of times the selected website has been accessed. Inputs of selected first and second virtual characters are also received. Each of the virtual characters has player points associated with them. A code segment generates a graphical representation of interactive engagement of the first and second virtual characters in the simulated game environment. As a result of the engagement at least one determinative outcome is generated. Based on the determinative outcomes a winning virtual character is determined, and the selected internet website is awarded to the winning virtual character.

According to another aspect of the present invention, an interactive game for interactive engagement between multiple on-line participants in competition over internet websites or the like is provided. The interactive game includes a character module, a website selection module, a gaming module and a player interface module. The character module is configured to receive an input selection of virtual characters by two or more participants. Each of the virtual characters has player points associated therewith. The website selection module is configured to receive an input of a selected internet website by one of the participants. The website selection module is also configured to assign a website value to the selected website based, at least in part, on the number of times the website has been accessed. The player interface module is configured to generate a simulated game environment overlaying the selected internet website. The gaming module is configured to allow the participating virtual characters to engage one another in the simulated game environment to determine a winning virtual character based on a series of determinative outcomes. The winning virtual character is awarded the selected internet website, and the winning virtual character's player points are adjusted based at least in part on the value of the awarded website. According to one embodiment, the gaming module is also configured to enable the participants to control the movements of the virtual characters to stimulate actual engagement of the virtual characters.

According to another aspect of the present invention, the winning virtual character is based at least in part on the respective accumulated player points of each of the participating virtual characters.

According to still another aspect of the present invention, the probability of the gaming module determining a particular determinative outcome is increased by one of the virtual characters expending player points.

According to another aspect of the present invention, an avatar database is provided. The avatar database is communicably coupled to the character module and includes a plurality of avatars. The character module is configured to receive an input of a selected avatar and to associate the selected avatar with one of the virtual characters.

According to yet another aspect of the present invention, a random number generator is communicably coupled to the gaming module and player interface module. The random number generator is configured to generate a random value attributable the virtual characters of each of the engaged participants, compare the generated random values of engaged participants with the generated random values of other engaged participants and increment player points associated with the virtual characters of each of the participants based on at least in part the comparison.

Other features and advantages of the invention will be apparent from the following specification taken in conjunction with the following drawings.

### BRIEF DESCRIPTION OF THE DRAWINGS

To understand the present invention, it will now be described by way of example, with reference to the accompanying drawings in which:
FIG. 1 is a schematic block diagram of the game for interactive engagement between multiple on-line participants competing for control of internet websites in accordance with the present invention;
FIG. 2 is a schematic diagram of a distributed computer network;
FIG. 3 is a block diagram of a computer used in connection with the present invention;

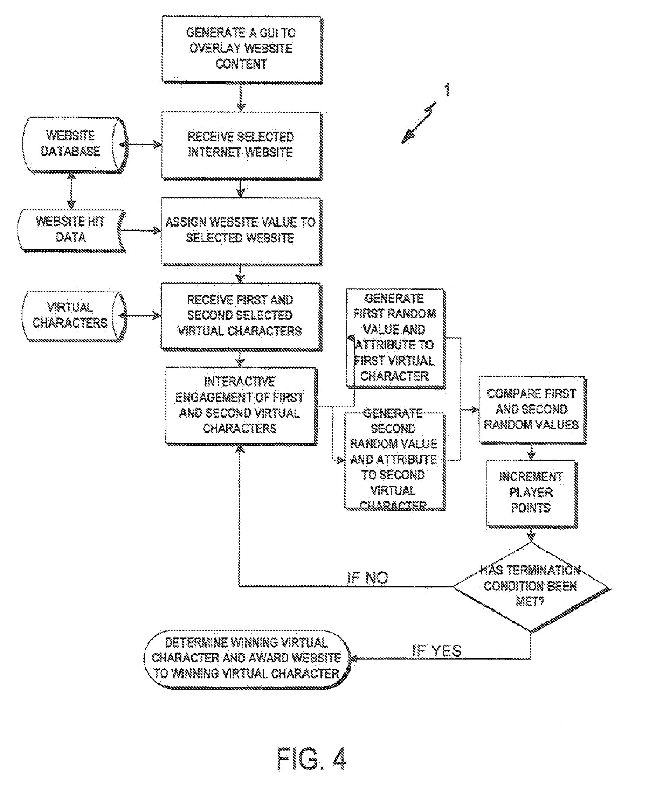

FIG. 4 is a flowchart illustrating the gaming method for interactive engagement between multiple participants in competition over internet websites in accordance with the present invention;

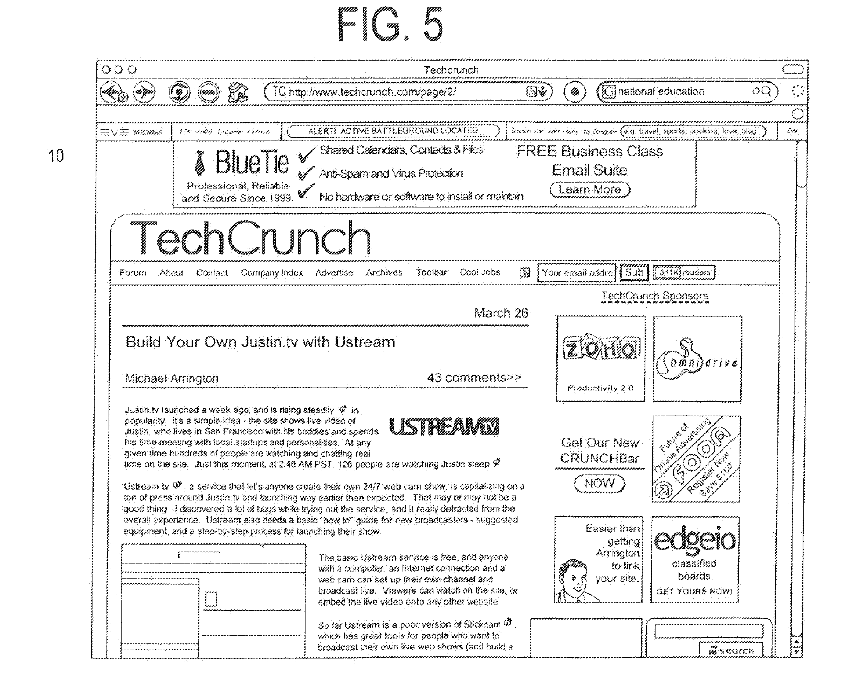

FIG. 5 is a exemplary website over which the simulated game environment of the present invention can be overlaid;
FIG. 6 is an exemplary screenshot of graphical representation of a virtual game environment generated in accordance with the present invention;
FIG. 7 is an exemplary screenshot of graphical representation of a virtual game environment generated in accordance with the present invention; and,
FIG. 8 is an exemplary screenshot of graphical representation of a virtual game environment generated in accordance with the present invention.

### DETAILED DESCRIPTION

While this invention is susceptible of embodiments in many different forms, there is shown in the drawings and will herein be described in detail preferred embodiments of the invention with the understanding that the present disclosure is to be considered as an exemplification of the principles of the invention and is not intended to limit the broad aspect of the invention to the embodiments illustrated.

According to the present invention, a game 1 is provided that allows for interactive engagement between multiple participants in a virtual competition for websites 10 in a simulated game environment 40. The term "participant" or "user," as used herein, describes an individual participating in the interactive engagement computer for websites 10. It will be understood that either "participant" or "user" will also be synonymous with the terms "player" and "individual."

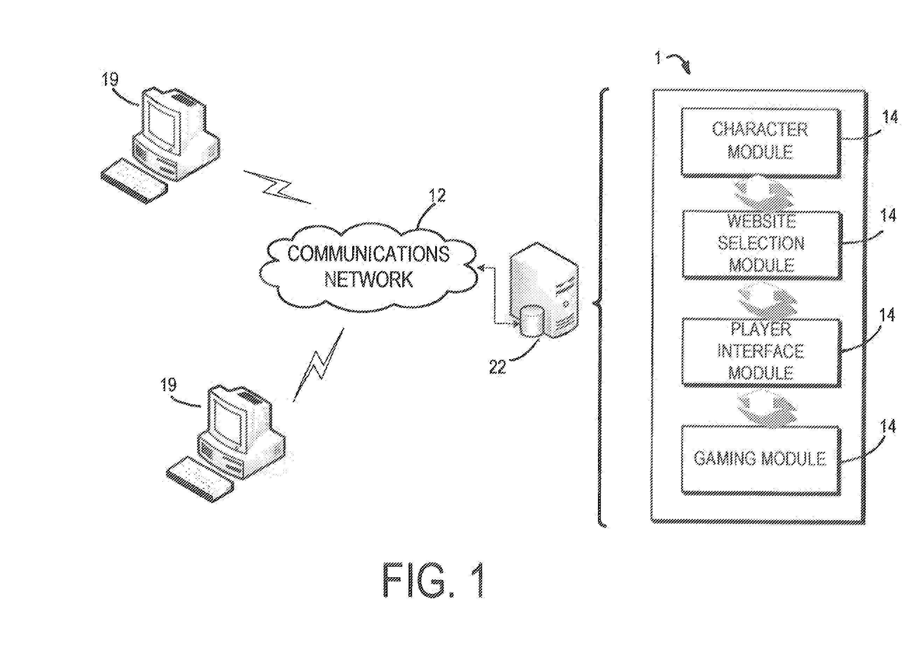

Generally, the game 1 of the present invention is based on an interactive game of war played between multiple game participants on the internet 12, in which internet websites 10 are a potential territories that may be conquered by participants. More, specifically, participants interactively engage in competition for control of websites 10 12 in a virtual gaming environment, preferably overlaying the website 10 being contested. As shown in FIG. 1, the game 1 of the present invention generally includes a character module 14, a website selection module 16, a player interface module 18 and a gaming module 20. As will be discussed in further detail herein, these modules (14, 16, 18, 20) are preferably modules of a computer-based game 1 embedded in a computer readable medium, and deployed over a distributed network 17.

Process descriptions or blocks in figures should be understood as representing modules, segments, or portions of code which include one or more executable instructions for implementing specific logical functions or steps in the process. Alternate implementations are included within the scope of the embodiments of the present invention in which functions may be executed out of order from that shown or discussed, including substantially concurrently or in reverse order, depending on the functionality involved, as would be understood by those having ordinary skill in the art.

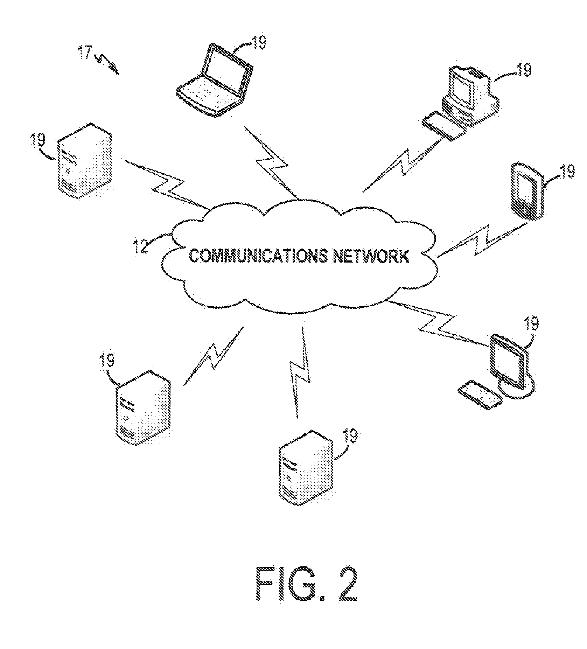

It will be understood that the present game 1 is generally implemented in an internet on-line environment via executable computer software instructions as processed by known computer hardware. Preferably, the game 1 is deployed and played over a distributed network environment 17. FIG. 2 is a diagram of a distributed network environment 17 over which a system may be deployed. As illustrated, the distributed network environment 17 comprises multiple clients 19 and servers 22 connected together by a communications network 15, such as the internet, or other known communication network. The distributed network environment 17 may comprise numerous Web-based technologies which allow the system to realize the benefits of distributed computing. For example, TCP/IP provides a network-independent transport layer while web clients 19 and servers 22 eliminate operating system dependencies. Furthermore, software components such as extended markup language (XML) enable data to be shared independent of software. As the virtual gaming system is explained in more detail herein, it is important to note that any architecture and software technology may be coupled together to construct this system. Thus, the system architecture set forth herein is exemplary and should not be construed as limiting. The virtual gaming environment system of the present invention preferably includes a client side and a server side. The client side 19 may communicate with the server side using a TCP/IP connection over communications network 15.

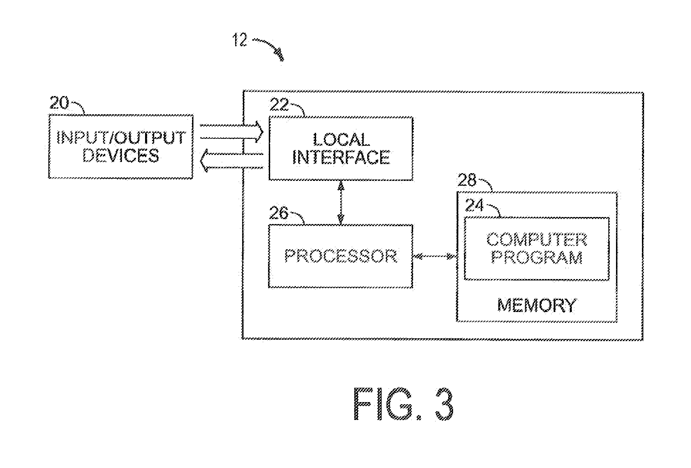

FIG. 3 is a block diagram of a computer or server 22. For purposes of understanding the hardware as described herein, the terms "computer" and "server" have identical meanings and are interchangeably used. Computer 22 includes control system 24. The control system 24 of the invention can be implemented in software (e.g., firmware), hardware, or a combination thereof. In the currently contemplated best mode, the control system 24 is implemented in software, as an executable program, and is executed by one or more special or general purpose digital computer(s), such as a personal computer (PC; IBM-compatible, Apple-compatible, or otherwise), personal digital assistant, workstation, minicomputer, or mainframe computer. An example of a general purpose computer that can implement the control system 24 of the present invention is shown in FIG. 3. The control system 24 may reside in, or have portions residing in, any computer such as, but not limited to, a general purpose personal computer. Therefore, computer 22 of FIG. 3 may be representative of any computer in which the control system 24 resides or partially resides.

Generally, in terms of hardware architecture, as shown in FIG. 3, the computer 22 includes a processor 26, memory 28, and one or more input and/or output (I/O) devices 20 (or peripherals) that are communicatively coupled via a local interface 22. The local interface 22 can be, for example, but not limited to, one or more buses or other wired or wireless connections, as is known in the art. The local interface 22 may have additional elements, which are omitted for simplicity, such as controllers, buffers (caches), drivers, repeaters, and receivers, to enable communications. Further, the local interface may include address, control, and/or data connections to enable appropriate communications among the other computer components.

The processor 26 is a hardware device for executing software, particularly software stored in memory 28. The processor 26 can be any custom made or commercially available processor, a central processing unit (CPU), an auxiliary processor among several processors associated with the computer 22, a semiconductor based microprocessor (in the form of a microchip or chip set), a macroprocessor, or generally any device for executing software instructions. Examples of suitable commercially available microprocessors are as follows: a PA-RISC series microprocessor from Hewlett-Packard Company, an 80x8 or Pentium series microprocessor from Intel Corporation, a PowerPC microprocessor from IBM, a Sparc microprocessor from Sun Microsystems, Inc., an 8xxx series microprocessor from Motorola Corporation, Intel Xeon (Single and Dual Core), or Intel Xeon Processor MP (Single and Dual Core).

The memory 28 can include any one or a combination of volatile memory elements (e.g., random access memory (RAM, such as DRAM, SRAM, SDRAM, etc.)) and nonvolatile memory elements (e.g., ROM, hard drive, tape, CDROM, etc.). Moreover, memory 28 may incorporate electronic, magnetic, optical, and/or other types of storage media. The memory 28 can have a distributed architecture where various components are situated remote from one another, but can be accessed by the processor 26.

The software in memory 28 may include one or more separate programs, each of which comprises an ordered listing of executable instructions for implementing logical functions. In the example of FIG. 3, the software in the memory 28 includes the control system 24 in accordance with the present invention and a suitable operating system (O/S) 24. A non-exhaustive list of examples of suitable commercially available operating systems 24 is as follows: (a) a Windows operating system available from Microsoft Corporation, including Microsoft Vista and Windows Mobile Client; (b) a Netware operating system available from Novell, Inc.; (c) a Macintosh operating system available from Apple Computer, Inc.; (d) a UNIX operating system, which is available for purchase from many vendors, such as the Hewlett-Packard Company, Sun Microsystems, Inc., and AT&T Corporation; (e) a LINUX operating system, which is freeware that is readily available on the Internet; (f) a run time Vxworks operating system from WindRiver Systems, Inc.; or (g) an appliance-based operating system, such as that implemented in handheld computers or personal digital assistants (PDAs) (e.g., PalmOS available from Palm Computing, Inc., and Windows CE available from Microsoft Corporation). The operating system 24 essentially controls the execution of other computer programs, such as the control system 24, and provides scheduling, input-output control, file and data management, memory management, and communication control and related services.

The control system 24 may be a source program, executable program (object code), script, or any other entity comprising a set of instructions to be performed. When a source program, the program needs to be translated via a compiler, assembler, interpreter, or the like, which may or may not be included within the memory 28, so as to operate properly in connection with the O/S 24. Furthermore, the control system 24 can be written as (a) an object oriented programming language, which has classes of data and methods, or (b) a procedure programming language, which has routines, subroutines, and/or functions, for example but not limited to, C, C++, C# (C Sharp), PHP, Pascal, Basic, Fortran, Cobol, Per1, Java, and Ada. In one embodiment, the control system 24 is written in C#. The I/O devices 20 may include input devices, for example but not limited to, a keyboard, mouse, scanner, microphone, touch screens, interfaces for various medical devices, bar code readers, stylus, laser readers, radio-frequency device readers, etc. Furthermore, the I/O devices 20 may also include output devices, for example but not limited to, a printer, bar code printers, displays, etc. Finally, the I/O devices 20 may further include devices that communicate both inputs and outputs, for instance but not limited to, a modulator/demodulator (modem; for accessing another device, system, or network), a radio frequency (RF) or other transceiver, a telephonic interface, a bridge, a router, etc.

If the computer 22 is a PC, workstation, PDA, or the like, the software in the memory 28 may further include a basic input output system (BIOS) (not shown in FIG. *). The BIOS is a set of software routines that initialize and test hardware at startup, start the O/S 24, and support the transfer of data among the hardware devices. The BIOS is stored in ROM so that the BIOS can be executed when the computer 22 is activated.

When the computer 22 is in operation, the processor 26 is configured to execute software stored within the memory 28, to communicate data to and from the memory 28, and to generally control operations of the computer 22 pursuant to the software. The control system 24 and the O/S 24, in whole or in part, but typically the latter, are read by the processor 26, perhaps buffered within the processor 26, and then executed.

When the control system 24 is implemented in software, as is shown in FIG. 3, it should be noted that the control system 24 can be stored on any computer readable medium for use by or in connection with any computer related system or method. In the context of this document, a "computer-readable medium" can be any means that can store, communicate, propagate, or transport the program for use by or in connection with the instruction execution system, apparatus, or device. The computer readable medium can be for example, but not limited to, an electronic, magnetic, optical, electromagnetic, infrared, or semiconductor system, apparatus, device, or propagation medium. More specific examples (a non-exhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via, for instance, optical scanning of the paper or other medium, then compiled, interpreted or otherwise processed in a suitable manner if necessary, and then stored in a computer memory. The control system 24 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions.

In another embodiment, where the control system 24 is implemented in hardware, the control system 24 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

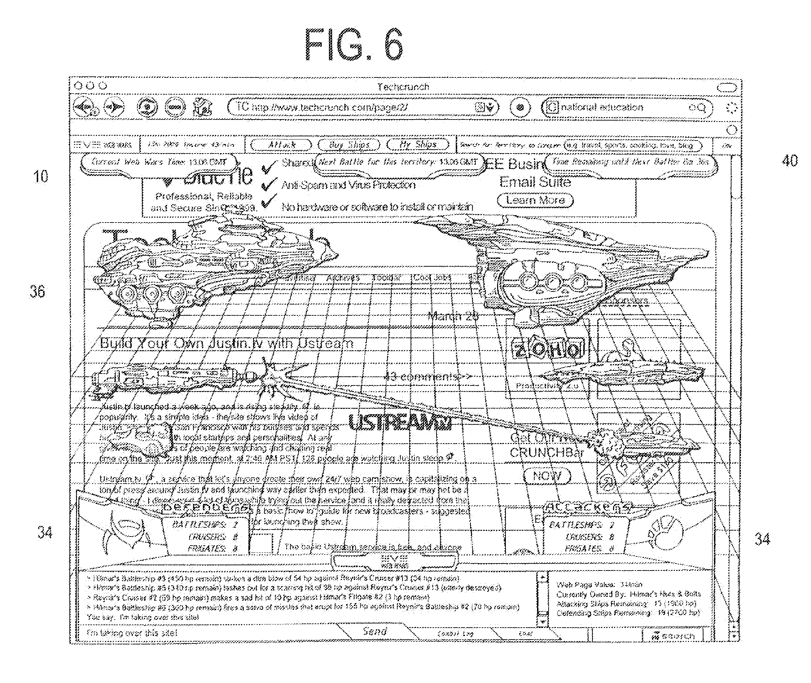

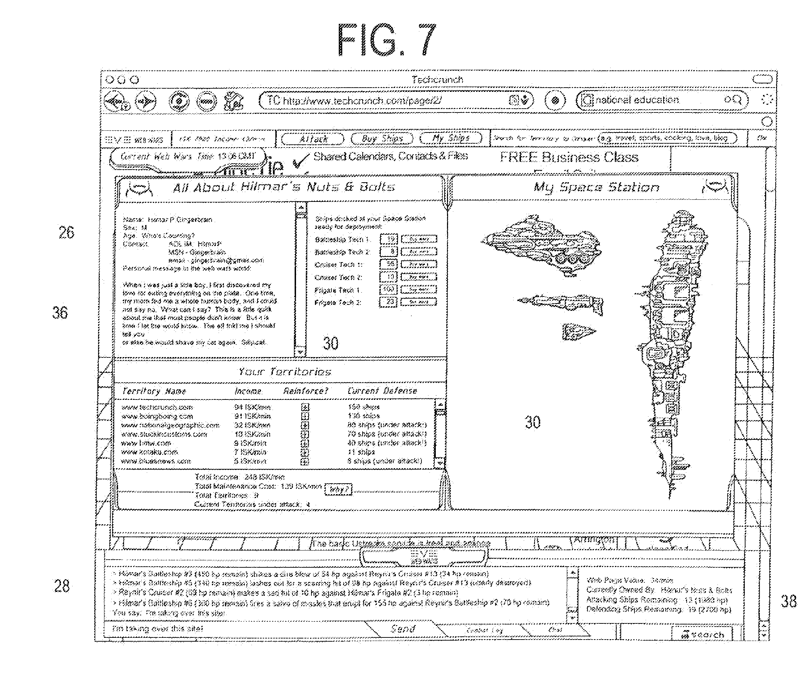

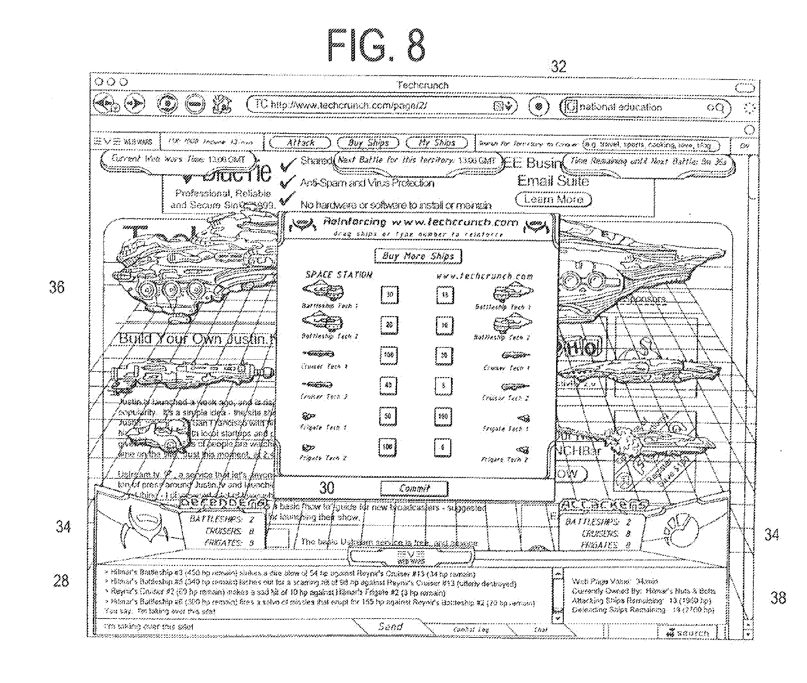

As shown in FIGS. 6-8, the character module 14 provides local and remote access to participant characters and character profiles 26, including player points 28 and game assets 30 associated with characters. Generally, the data stored in the character module 14 is stored in a shared database for each participant. The character module 14 is generally configured to provide rapid access to this stored data for the client side system. The character module 14 generally includes a virtual character interface component, a client cache database, and a server database interface. The character module 14 is responsible for providing rapid consistent access to a participant's own character and associated profiles, and the character profiles 26 of other participants. The character interface component is configured to receive requests for virtual characters and virtual character profiles 26. These requests are converted to database queries by the character interface component and are passed to the client database. The client database is a cache for the character profile 26 stored in the server side database.

According to the game 1 of the present invention, participants compete with other participants through virtual characters. In one embodiment of the invention, the virtual characters 34 are associated with each participants unique log-in or underlying data. However, it is also contemplated that participants may have the ability to chose from more than one of a plurality of characters created and stored by a particular participant. Accordingly, in one embodiment of the invention of the invention, the game 1 is configured to allow participants to select a character with which to participate. Thus, the game 1 is configured to receive an input of selected characters by each participant in a game. Each character has player points 28 associated therewith.

Generally, each character is associated with a database configured to store, accumulate and increment player points 28 associated with that character, or in some embodiments with the participant with which that character is associated. It will be understood, however, that the database need not be configured to perform all of these functions (i.e., store, accumulate and increment player points 28) and that these functions can be performed by other means, including separate a distinct databases and modules.

The game 1 of the present invention also preferably allows a participant to select from a variety of character profiles 26. Thus, according to one embodiment, the game 1 is configured to communicate with an avatar database. The avatar database includes a plurality of avatars that may be selected by participants in the present game 1. Thus, a selected avatar can be associated with a participant's selected virtual character. Because the present simulated environments can be generated to take on various themes, the game 1 can be played with consistent avatars such as, for example: spaceships vs. spaceships, soccer teams vs. soccer teams, castles vs. siege engines, dogs vs. cats, Spiderman vs. Batman, Godzilla vs. buildings, war vs. peace, robots vs. humans, and the like.

According to the present invention, participants play the game 1 in a simulated game environment 40, preferably implemented using an internet based web browser. In one embodiment, however, the present invention may be implemented in a game playing apparatus (e.g. a handheld device, a computer module or other devices adapted to communicate with the internet). According to one embodiment, the simulated game environment 40 is an on-line interactive interface and, more particularly, a graphical interface overlay 36 which is installed on a client computer that is generated upon selection of a targeted website 10 by a participant. Thus, when participant is competing for control of a website, the overlay 36 appears on top of the website 10 and the battle ensues thereon. Although it is preferable that the graphical interface overlay 36 is configured to overlay the content of a website, it will be understood that the graphical interface can appear as a separate visual module in juxtaposition to the website 10 without departing from the present invention. Further, as illustrated in FIG. 6, the game 1 of the present invention is preferably played on a ghost image disposed entirely above of the websites 10 at a meta-level such that it does not engage, alter, replicate or otherwise interfere the underlying website 10 itself. However, it will be understood that the graphical interface overlay 36 can be generated over a copy of the website 10 or be integrated with the underlying selected website 10 without departing from the invention claimed and described herein. It will also be understood that the player interface module 18 works cooperatively with the gaming module 20 to manage the virtual gaming environment.

According to the game 1 of the present invention, a participant selects a website 10 that the participant desires to win. It is contemplated that participants use known search engines to locate desirable websites 10. The game 1 is configured to receive an input by the participant of a selected internet website 10 over which participants will battle. The game 1 assigns website value 38 to the selected website 10 either at the time of selection or prior to selection. Thus, it is preferable that at least part of the determination of the number of website value 38 attributable to a particular website 10 is based on the number of times the website 10 has been accessed by web users (i.e., hits). Thus, as an analogy, a particular country may be a very valuable "territory" to control in traditional war games because it can focus military power in a particular theater of war. In the game 1 of the present invention, a particular website 10 can have a tremendous number of visitors, making it a very valuable site for a participant. It will be understood, however, that other factors other than the number of hits can contribute to the web points or value associated with a website. For example, a portion of a particular website's value could be attributable to the content of that website, the general cache of the website 10 or any other objectively or subjectively determinative factors.

After the target website 10 is selected, and each participant employs either a selected or associated character, the participants can engage in virtual combat in the simulated game environment 40. According to one embodiment, shown for example in FIG. 6, the game 1 is configured to generate graphical representation of the interactive engagement of each participant's virtual character 34 in the simulated game environment 40.

As shown in FIG. 6, the gaming module 20 of the present invention is configured to allow a participant's virtual character 34 to engage at least one other participant and their virtual characters 34 to ultimately determine a winning virtual character. As discussed below, the winning character is ultimately awarded the selected internet website 10 and at least a portion of the associated website value 38. FIGS. 6-8 depict the client side game-play component of the gaming module 20 in the form of the simulated game environment 40. The game-play component of the module is coupled by known means to the user interface. A participant may select certain actions via the user interface through known input means such as, for example, drop down menus, input buttons, input fields and software controlled images (via known I/O devices). The game-play component receives the selected signals from the user interface and communicates with the server side game-play component over network. Preferably, the signals are communicated using known protocols such as, for example, hypertext markup language protocol (HTML) over hyper-text transfer protocol (HTTP). Accordingly, HTML can be used for browser display purposes while HTTP is a top level communication protocol used to request and post data. It will be understood that other protocols can be used for communication purposes between the client side game-play component and the server side game-play component.

More specifically, the client side game play component employs an embedded web browser and provides interface routines for integration with the user interface component. The browser uses HTTP to interact with the server gaming module 20. The gaming module 20 implements the game rules and returns data to the browser for display. As explained above, the game 1 consists of participants interactively engaging in competition for control of websites 10 and associated website value 38. When a participant desires to engage another participant, for example, HTTP commands are sent by the game play component to the server game play component. Preferably, the selected actions are encoded in the URL sent to the server game play component by way of the HTTP commands.

More particularly, as a result of play, a winning character of the selected internet website 10 as between the participants and their respective virtual characters 34 is determined based on a series of determinative outcomes generated by the game 1. Preferably, these determinative outcome are produced by generating a series of random numbers using a known random number generating algorithm, for example the C++ Rand() function or any algorithm suitable for generating random values. Accordingly, the game 1 generates a first random value attributable to the first virtual character, and a second random value attributable to the second virtual character. The first random value is then with the second random value. Based on the comparison, the player points 28 associated with the first and second virtual characters 34 are incremented according to a second algorithm. These steps of generating first and second random value, comparing the generated first and second random values and incrementing player points 28 are repeated until a termination condition is met. It is contemplated that the termination condition can be the time at which the player points 28 associated with at least one of the participating virtual characters 34 is less than or equal to a predetermined threshold. For example, if the player points 28 associated with a participating virtual character 34 who controls the selected website 10 become equal to, or drop below, zero (or some other threshold), the termination condition is met and no additional random values will be generated with respect to at least that virtual character. Conversely, the termination condition can be the time at which the player points 28 associated with one of the participating virtual characters 34 is greater than, or equal to, a predetermined threshold. The termination condition can also occur when one of participating virtual characters 34 terminates interactive engagement with the other participating virtual characters.

According to one embodiment of the invention, the winning virtual character is determined based at least in part on the respective accumulated player points 28 of the participant virtual characters. Accordingly, it is contemplated that the relative accumulated player points 28 associated with each of the participating virtual characters 34 will be factored into the algorithm used to determine the winning virtual character. Fore example, the accumulated player points 28 (or some factor thereof) can be added to the first and second random numbers prior to, or after the time, that the random numbers are generated. It will be understood that the accumulated player points 28 may be factored into the determination of the winning virtual character in a manner other than as they become a multiplier or summation variable factored into the random number generated. Indeed, it will be understood that any consideration of the relative accumulated player points 28 in determining the winning virtual character is contemplated as being within the scope of the present invention.

A participating virtual character 34 can "purchase" game assets 30 that allow a participating virtual character 34 to increase the probability of being determined as the winning virtual character. Thus, for example, in a space battle virtual game environment, a participating virtual character 34 can use accumulated player points 28 to purchase additional space craft or weaponry. Or in another example in which the virtual game environment is a football pitch, the participating virtual characters 34 can purchase game assets 30 such as "stamina" or "energy drinks." It will be understood, that other virtual resources that are representative of a participating virtual character's relative strength in the virtual environment may be employed without departing from the present invention.

Once a winning character is determined, the selected internet website 10 is awarded to the winning character. Additionally, the website value 38 associated with the selected website 10 are awarded to the winning character. It is contemplated that the game 1 can award the entirety of the website value 38 of the selected website 10 to the winning character, or alternatively, some portion of the website value 38 may be awarded to the winning character. As such, the game 1 increments the player points 28 associated with the winning characters based on the website value 38 of the awarded website. Thus, the server gaming module 20 can update the databases associated with the participating virtual characters.

According to one embodiment of the present invention, the game 1 is configured to transmit an alert 32 to website owners when another player has selected the website owner's website 10 for "battle." An alert 32 may also be transmitted when an person is simply browsing a website, and the website 10 is an active battleground territory. It is contemplated that the alert 32 can be customizable to indicate, for example, if the "territory" is empty (i.e., website 10 is not controlled), if the "territory" has an active battle in progress, if the "territory" is conquerable based on the virtual characters 34 of the participant and if the territory is within a certain value range. The alert 32 can be configured to be presented in the form of an audible signal, visual transmission or a combination audio-visual alert 32. For example, a website owner could receive an e-mail, short message service (SMS) or instant messaging (IM) notification. Alternatively, a pop-up window could appear in the website owner's browser. It is contemplated that either of these visual notifications can be accompanied by an audible tone or the like.

While the specific embodiments have been illustrated and described, numerous modifications come to mind without significantly departing from the spirit of the invention and the scope of protection is only limited by the scope of the accompanying Claims.

## Claims

1. A game playing apparatus for interactive engagement between multiple participants competing for control of internet websites or the like, the game playing apparatus including a plurality of modules and being **characterized by**:
a character module, the character module being configured to receive an input selection of virtual characters by at least two participants, the virtual characters each having accumulated player points associated therewith;
a website selection module, the website selection module being configured to receive an input of a selected internet website by one of the participants, the website selection module being further configured to assign a website value to the selected website based at least on the number of times the website has been accessed;
a player interface module, the player interface module being configured to generate a simulated game environment overlaying the selected internet website; and,
a gaming module, the gaming module being configured to allow the participating virtual characters to engage one another in the simulated game environment to determine a winning virtual character based on series of determinative outcomes, the winning virtual character being awarded the selected internet website and at least a portion of the associated website value.

2. The game playing apparatus of claim 1, wherein the gaming module determines a winning virtual character outcome is based at least in part on the respective player points associated with each of the participating virtual characters.

3. The game playing apparatus of claim 1, wherein the character module is further configured to receive an input of a selected avatar and to associate the selected avatar with the selected first virtual character.

4. The game playing apparatus of claim 4, further comprising an avatar database communicably coupled to the character module, the avatar database comprising a plurality of avatars.

5. The game playing apparatus of claim 1, wherein the gaming module is further configured to enable the participants to control the movements of participating first virtual characters.

6. The game playing apparatus of claim 1, further comprising a random number generator module communicably coupled to the gaming module, the random number generator module be configured to generate a random value attributable to each of the participating virtual characters, compare the generated random values attributed to engaged participants with the generated random values attributed to other engaged participants, and increment player points associated with the virtual characters based on the comparison of generated random values.

7. The game playing apparatus of claim 1, wherein the character, website selection, player interface and gaming modules are embedded on a computer readable medium configured to cause one or more computer processors to implement the game.

8. A computer readable storage medium adapted to control a computer and comprising a plurality of code segments for generating and playing a game for interactive engagement between multiple participants, the computer readable storage medium comprising:
a code segment for generating a graphical interface configured to overlay the content of a website overlay, the graphical interface overlay defining a simulated game environment;
a code segment for receiving an input of a selected internet website;
a code segment for assigning a website value to the selected website based at least on the number of times the selected website has been accessed;
a code segment for receiving an input of a selected first virtual character having player points associated therewith;
a code segment for receiving an input of a selected second virtual character having player points associated therewith;
a code segment for generating in the simulated game environment a graphical representation of interactive engagement of the first virtual character and the second virtual character;
a code segment for generating at least one determinative outcome resulting from the interactive engagement of the first and second virtual characters;
a code segment for determining a winning virtual character as between the first virtual character and the second virtual character based on the generated determinative outcomes; and,
a code segment for awarding the selected internet website and at least a portion of the website value associated with the selected website to the winning virtual character.

9. The computer storage readable medium of claim 8, further comprising a code segment for incrementing player points associated with at least one of the first and second virtual characters based on the determinative outcomes generated during the interactive engagement of the first and second virtual characters.

10. The computer storage readable medium of claim 8, further comprising a code segment for incrementing the player points associated the winning virtual character based on the website value associated with the selected internet website.

11. The computer storage readable medium of claim 8, wherein the code segment for generating at least one determinative outcome comprises:
a code segment for generating a first random value attributable to the first virtual character;
a code segment for generating a second random value attributable to the second virtual character; and,
a code segment for comparing the first random value with the second random value;
a code segment for incrementing player points associated with the first and second virtual characters based on the comparison of the first and second random values.

12. The computer readable storage medium of claim 12, wherein the code segment for determining a winning virtual character determines a winning virtual character when a termination condition is met.

13. The computer readable storage medium of claim 13, wherein the termination condition is one of either the player points associated with one of the first and second virtual characters is less than or equal to a predetermined threshold.

14. The computer readable storage medium of claim 13, wherein the termination condition is one of either the player points associated with one of the first and second virtual characters is greater than or equal to a predetermined threshold.

15. The computer readable storage medium of claim 13, wherein the termination condition occurs when one of either the first and second virtual characters terminates interactive engagement with the other of the first and second virtual character.

16. The computer readable storage medium of claim 12, wherein the first random number is based on at least the accumulated player points of the first virtual character, and wherein the second random number is based in part on the accumulated player points of the second virtual character.

17. The computer readable storage medium of claim 8, further comprising a code segment for transmitting an alert based on receiving an input transmission of a selected internet website.

18. The computer readable storage medium of claim 8, further comprising:
a code segment for receiving an input transmission of a selected avatar; and,
a code segment for associating the selected avatar with one of the first and second virtual characters.

19. The computer readable storage medium of claim 19, further comprising a code segment for communicating with an avatar database, the avatar database comprising a plurality of avatars.
